# DEMANDE DE BREVET EUROPEEN

(11) **EP 4 821 732 A1**
(43) Date de publication de la demande: **14.10.2026**
(21) Numéro de dépôt: 26161764.1
(22) Date de dépôt: 02.03.2026
(51) Int. Cl.: B60K 35/10, B60K 35/22, G07B 15/06

(54) **DISPOSITIF D'ÉCRAN D'AFFICHAGE TACTILE POUR VÉHICULE AUTOMOBILE GÉRANT LE SUIVI DE PAIEMENT D'UN PÉAGE EN FLUX LIBRE**

(30) Priorité: 07.04.2025 FR 2503619
(71) Demandeur: Stellantis Auto SAS, 78300 Poissy (FR); FCA US LLC, Auburn Hills, MI 48326-2766 (US)
(72) Inventeur: BAYARD, LOIC, 91470 FORGES LES BAINS (FR); POITEVIN, THOMAS, 91620 NOSAY (FR)
(74) Mandataire: ESIP

(57) **Abrégé**

Dispositif d'écran d'affichage tactile (DEC) pour véhicule automobile comportant une première partie d'écran tactile (EC1) affichant des informations nécessaires pour la conduite du véhicule et une deuxième partie d'écran tactile (EC2), adjacente à la première (EC1), affichant un nombre déterminé de pages d'écran adjacentes remplissant la surface d'affichage (SA2) de la deuxième partie d'écran (EC2) et dédiées respectivement à une ou plusieurs fonctionnalités et réglages du véhicule ; ladite première partie d'écran (EC1) affichant un bouton de commande tactile (TOP) configuré pour gérer une fonction de gestion de suivi de paiement d'un péage en flux libre, à la suite d'un appui d'une durée déterminé par un utilisateur (UTI) du dispositif d'écran (DEC), sur le bouton de commande tactile (TOP).

## Description

La présente invention concerne de manière générale les IHMs (Interface Homme Machine) agencées dans les cockpits, ou habitacles, de véhicules automobiles et s'intéresse plus particulièrement à un dispositif d'écran d'affichage tactile pour véhicule automobile gérant le suivi de paiement d'un péage en flux libre ; ledit dispositif d'écran regroupant par ailleurs les principales informations affichées habituellement sur un combiné d'instruments de véhicule automobile et les informations affichées habituellement sur un écran central du véhicule, appelé également écran multimédia.

Le terme « combiné d'instruments », ou tout simplement « combiné », est généralement associé aux termes « tableau de bord » ou « instrument panel » ou encore « cluster », en terminologie anglosaxonne.

Depuis fin 2022, le péage en flux libre appelé « free flow » en anglais ou encore péage sans barrière, s'installe progressivement sur les autoroutes françaises.

Largement répandu en Amérique du Nord, ce nouveau système vient améliorer pour certains et détruire pour d'autres des habitudes déjà bien ancrées.

Le péage en flux libre qualifie une autoroute payante dépourvue de barrière de péage physique. Ainsi, les véhicules circulent sans interruption sous des portiques équipés de capteurs et de caméras capables de détecter le passage des véhicules.

Aujourd'hui, ce système continue de se déployer avec pour objectif de rendre les trajets plus simples et plus fluides pour tous les usagers.

Les bénéfices du péage en flux libre sont multiples :
- bénéfice écologique ;
- économie de 30 minutes de trajet (estimation en période de fort trafic et hors télépéage sur un trajet de 2h30 en moyenne)
- pour un poids lourd, c'est entre 0,5 et 0,7l de carburant économisé à chaque péage évité.

Le fonctionnement de ce nouveau système repose sur des technologies de reconnaissance automatique des plaques d'immatriculation et sur des transpondeurs RFID (Radio Frequency Identification) qui réussissent à capturer les données des véhicules afin de les transmettre en temps réel à un centre de traitement.

Si l'usager dispose d'un abonnement au télépéage, les informations sont automatiquement associées à son compte. Le montant est ensuite prélevé selon son contrat.

Dans le cas contraire, le système émet une facture et l'envoie à l'adresse indiquée sur la carte grise du véhicule et le détenteur de la carte grise dispose d'un délai de 72 heures (délai standard sans majoration) pour s'acquitter du montant dû.

Sans abonnement au télépéage, l'usager doit aller payer le montant du péage, dans le délai imposé, sur un site internet dédié, chez un buraliste ou sur une borne de paiement. Ce qui n'est pas très pratique et va à l'opposé d'une démarche visant à automatiser et simplifier le paiement d'un péage autoroutier.

En l'absence de paiement du péage en flux libre dans les 72 heures, l'instance en lien avec le réseau autoroutier établit un procès-verbal de contravention et envoie un avis de paiement à l'adresse indiquée sur la carte grise du véhicule. Cet avis de paiement inclut le montant total à payer majoré d'une indemnité forfaitaire de 90€.

Si une régularisation a lieu dans les 15 jours, l'indemnité forfaitaire de 90€ est réduite à 10€.

En l'absence d'un paiement dans les 2 mois, l'amende forfaitaire est majorée de 375 €.

Plus de 5 amendes majorées sur 12 mois peuvent conduire à une amende de 7 500 €.

Pour simplifier la démarche, il manque un moyen d'accès facilité à une fonction de paiement du péage en flux libre, à partir de l'habitacle du véhicule automobile et notamment à partir du tableau de bord du véhicule.

Dans la plupart des tableaux de bord de véhicules automobiles, les affichages des informations nécessaires pour la conduite du véhicule (vitesse, nombre de tours /minute, niveau de carburant, ...) se font de plus en plus sous forme virtuelle (c'est-à-dire en tant qu'images) par l'intermédiaire d'un combiné d'instruments prenant la forme d'un écran reconfigurable de type LCD (Liquid Crystal Display) à matrice active, généralement du type TFT (Thin Film Transistor). En outre, le tableau de bord présente généralement aussi un ensemble d'indicateurs et de témoins lumineux qui renseignent le conducteur sur le fonctionnement d'organes et/ou d'équipements du véhicule et sur les paramètres de conduite du véhicule. Ces indicateurs et témoins sont intégrés dans l'écran LCD-TFT sous forme d'icônes, ou pictogrammes, pouvant apparaître sélectivement dans la surface d'affichage du combiné.

Le combiné est généralement agencé sur la planche de bord, en regard du conducteur quand ce dernier est assis au volant du véhicule.

Ce combiné pouvant être de taille réduite, est complété par un écran tactile central, ou écran multimédia, de forme générale rectangulaire, agencé généralement au centre de la planche de bord.

L'écran multimédia permet notamment d'afficher un certain nombre de pages d'écran affichant chacune successivement des informations en relation, respectivement, avec des fonctionnalités du véhicule. Ces informations sont fournies par le système multimédia du véhicule, appelée encore système d'info divertissement (« infotainement system » en terminologie anglosaxonne) qui gère les échanges entre le conducteur et le véhicule.

On trouve par exemple des pages dédiées à l'aide à la conduite (navigation, contrôle de la trajectoire du véhicule, distances de sécurité, rétrovision, ...), des pages dédiées au confort des occupants du véhicule : (climatisation, température de chauffage des sièges, ...), des pages dédiées à l'audio et à l'info divertissement (radio, téléphonie, ...) et également des pages dédiées aux informations techniques d'état et de paramétrage en relation avec un mode de conduite d'un véhicule à motorisation électrique ou hybride : thermique ou électrique.

Dans ce type d'affichage, chacune des pages doit être sélectionnée par l'utilisateur sur l'écran central à partir d'un bouton de commande tactile agencé sur l'écran tactile, en bordure de l'écran et/ou d'un bouton « physique » agencé à proximité de l'écran, sur le volant de direction ou au voisinage du volant, ou encore sur la console centrale du véhicule.

Avec ce type d'affichage, l'utilisateur ne peut pas accéder directement à l'affichage d'une page dédiée à la gestion d'une fonction déterminée, et notamment une fonction en relation avec un service de paiement à distance (télépaiement).

Pour pouvoir accéder à l'affichage de cette page, l'utilisateur doit effectuer plusieurs opérations successives à partir d'un menu et de sous-menus proposés sur l'écran central.

D'autre part, ce type d'affichage ne permet pas d'afficher simultanément les informations en lien avec la fonction de gestion du service de paiement à distance et les informations de navigation, audio, d'info divertissement, ...

L'invention propose une solution permettant de regrouper l'ensemble des opérations de gestion (affichage et commande) du suivi de paiement d'un péage en flux libre sur un seul et même « grand » écran central tactile ; écran combinant une version simplifiée d'un combiné classique et le contenu d'un écran central multimédia.

A cet effet, la présente invention a pour premier objet un dispositif d'écran d'affichage tactile pour véhicule automobile, comportant une première partie d'écran tactile affichant des informations nécessaires pour la conduite du véhicule et une deuxième partie d'écran tactile, adjacente à la première, affichant un nombre déterminé de pages d'écran adjacentes remplissant la surface d'affichage de la deuxième partie d'écran et dédiées respectivement à une ou plusieurs fonctionnalités et réglages du véhicule ; ladite première partie d'écran affichant un bouton de commande tactile porteur d'un pictogramme représentatif d'une fonction de gestion de suivi du paiement d'un péage en flux libre, configuré pour gérer ladite fonction, à la suite d'un appui d'une durée déterminé par un utilisateur du dispositif d'écran, sur le bouton de commande tactile.

Selon une caractéristique, le bouton de commande tactile est configuré pour s'afficher avec un pictogramme d'une première couleur déterminée, notamment grise, quand la fonction de gestion de suivi du paiement est désactivée, avec le pictogramme d'une deuxième couleur déterminée, différente de la première, notamment verte quand la fonction de gestion de suivi du paiement est activée et qu'aucun paiement n'est en attente, et avec le pictogramme d'une troisième couleur déterminée différente des première et deuxième couleurs, notamment orange, quand la fonction de gestion de suivi du paiement est activée et qu'un paiement est attendu dans au moins un premier délai de paiement déterminé ; le pictogramme de troisième couleur étant adapté graphiquement, notamment par l'ajout d'un point d'exclamation, pour alerter l'utilisateur que le paiement est attendu dans un deuxième délai de paiement déterminé plus court que le premier.

Selon une autre caractéristique, le bouton de commande tactile est configuré pour commander l'affichage d'une fenêtre de contenu déterminé en rapport avec le pictogramme et la couleur du pictogramme, en superposition partielle de la deuxième partie d'écran, et pendant une durée déterminée, à la suite d'un premier appui de durée déterminée sur le bouton de commande par l'utilisateur.

Selon une autre caractéristique, la deuxième partie d'écran est configurée pour afficher une première fenêtre d'affichage à la suite d'un premier appui court sur le bouton de commande tactile quand la fonction de gestion de suivi est désactivée ; le contenu de ladite première fenêtre informant l'utilisateur que la fonction de suivi est désactivée et qu'un appui long sur ladite fenêtre permet d'activer la fonction de gestion de suivi.

Selon une autre caractéristique, la deuxième partie d'écran est configurée pour afficher une deuxième fenêtre d'affichage à la suite d'un premier appui court sur le bouton de commande tactile quand la fonction de gestion de suivi est activée ; le contenu de ladite deuxième fenêtre informant l'utilisateur que la fonction de suivi est activée et qu'aucun paiement n'est en attente.

Selon une autre caractéristique, la deuxième partie d'écran est configurée pour afficher une troisième fenêtre d'affichage à la suite d'un premier appui court sur le bouton de commande tactile quand la fonction de gestion de suivi est activée et qu'un paiement d'un montant déterminé est attendu dans un premier délai de paiement déterminé ; le contenu de ladite troisième fenêtre informant l'utilisateur qu'un paiement d'un montant déterminé est attendu dans le premier délai déterminé, notamment soixante-douze heures, et affichant un raccourci de commande tactile permettant à l'utilisateur d'accéder à une plateforme de paiement en ligne distante.

Selon une autre caractéristique, la deuxième partie d'écran est configurée pour afficher une quatrième fenêtre d'affichage à la suite d'un premier appui court sur le bouton de commande tactile quand la fonction de gestion de suivi est activée et qu'un paiement d'un montant déterminé est attendu dans le deuxième délai de paiement déterminé ; le contenu de ladite quatrième fenêtre informant l'utilisateur qu'un paiement d'un montant déterminé est attendu dans un deuxième délai déterminé notamment trois heures et affichant un raccourci de commande tactile permettant à l'utilisateur d'accéder à une plateforme de paiement en ligne distante.

Selon une autre caractéristique, la deuxième partie d'écran est configurée pour afficher une cinquième fenêtre d'affichage à la suite d'un premier appui long sur le bouton de commande tactile quand la fonction de gestion de suivi est activée ou désactivée ; le contenu de ladite cinquième fenêtre affichant un agencement tactile de sélection pour l'activation ou de la désactivation de la fonction de gestion de suivi, et un raccourci de commande tactile permettant à l'utilisateur d'accéder à des paramètres de réglage de la fonction.

Selon une autre caractéristique, la fenêtre d'affichage disparait de la deuxième partie d'écran à la suite d'un deuxième appui sur le bouton de commande tactile par l'utilisateur.

La présente invention a pour deuxième objet, un véhicule automobile comportant un dispositif d'écran d'affichage tactile tel que décrit ci-dessus.

La présente invention a pour avantage d'offrir un moyen d'accès ergonomique et intuitif (un « raccourci » de commande) supplémentaire qui ne fait que réutiliser des fonctions déjà présentes sur le véhicule (écran tactile).

La présente invention permet de réduire le nombre de commandes physiques dans l'habitacle et donc réduire le nombre de pièces et diversités organiques : gain en PRF (Prix de Revient de Fabrication) en supprimant une commande physique.

D'autres avantages et caractéristiques de la présente invention, pourront ressortir plus clairement de la description qui va suivre, donnée uniquement à titre d'exemple non limitatif et faite en se référant aux dessins dans lesquels :
[Fig. 1] illustre une vue intérieure schématique d'un habitacle de véhicule automobile comportant un dispositif d'écran d'affichage tactile selon l'invention ;
[Fig. 2] illustre un mode de réalisation d'un dispositif d'écran d'affichage tactile selon l'invention ;
[Fig. 3] illustre une première situation de suivi du paiement d'un péage en flux libre à partir du dispositif d'écran d'affichage tactile selon l'invention ;
[Fig. 4] illustre une deuxième situation de suivi du paiement du péage en flux libre à partir du dispositif d'écran d'affichage tactile selon l'invention ;
[Fig. 5] illustre une troisième situation de suivi du paiement du péage en flux libre à partir du dispositif d'écran d'affichage tactile selon l'invention ;
[Fig. 6] illustre une quatrième situation de suivi du paiement du péage en flux libre à partir du dispositif d'écran d'affichage tactile selon l'invention ; et
[Fig. 7] une cinquième situation de suivi du paiement du péage en flux libre à partir du dispositif d'écran d'affichage tactile selon l'invention.

La présente invention tire profit de l'affichage du dispositif d'écran selon l'invention afin de pouvoir appuyer directement sur le bouton de commande tactile pour gérer une fonction de suivi du paiement d'un péage dans une infrastructure de péage en flux libre.

Selon le type d'appui (court ou long) sur ce bouton et le contexte, l'utilisateur pourra obtenir plus d'information sur la fonction, sera dirigé vers une page spécifique de paramétrage ou pourra activer ou désactiver la fonction de gestion de suivi du paiement du péage.

Les principales actions de commande possibles à partir de ce bouton correspondent à des raccourcis de commande et notamment :
- un raccourci pour obtenir plus d'informations concernant la fonction de gestion de suivi du paiement (état activé, désactivé, paiement à effectuer et délai de paiement avant majoration) ;
- un raccourci pour payer le montant du péage ; et
- un raccourci pour désactiver/réactiver la fonction de gestion de suivi du paiement.

En fonction de la couleur du pictogramme associé au bouton de commande tactile (notamment gris, vert, orange), un état fonctionnel est associé.

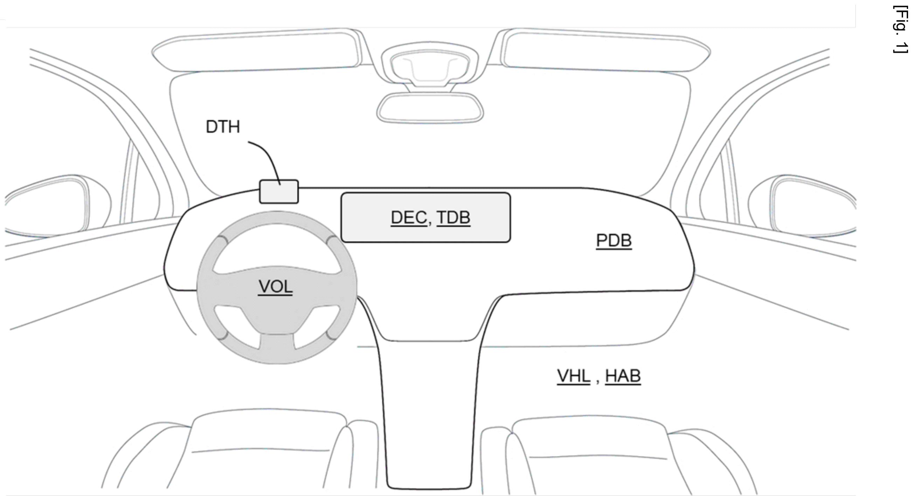

La figure 1 illustre une vue intérieure schématique d'un habitacle, ou cockpit, HAB de véhicule automobile VHL comportant un dispositif d'écran d'affichage tactile DEC selon l'invention.

Le dispositif d'écran d'affichage tactile DEC est de forme générale rectangulaire et s'étend transversalement dans la partie centrale de la planche de bord PDB, depuis le volant de direction VOL du véhicule VHL. Il constitue à lui seul le tableau de bord TDB du véhicule VHL.

Il peut être éventuellement complété d'un écran de type affichage tête haute ou HUD (Head Up Display), DTH, agencé sur la planche de bord PDB en arrière du volant VOL et de manière à apparaitre au-dessus du volant de direction VOL, dans le champ de vision du conducteur.

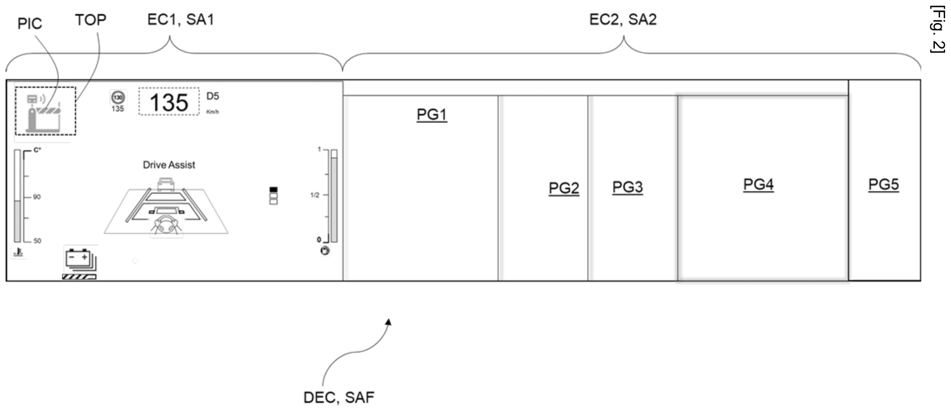

Dans le mode de réalisation d'un dispositif d'écran d'affichage tactile DEC selon l'invention, illustré à la figure 2, le dispositif d'écran d'affichage tactile DEC, regroupe l'affichage des principales informations de conduite offertes par le traditionnel combiné d'instruments dans une première partie d'écran EC1, et l'affichage des informations offertes par le traditionnel écran central, ou écran multimédia d'un véhicule, dans une deuxième partie d'écran EC2, adjacente à la première EC1.

Avec ce type de dispositif d'écran d'affichage tactile DEC selon l'invention, la première partie d'écran EC1, similaire à un combiné traditionnel, n'est plus agencée en regard du volant de direction VOL (figure 1), en étant centré par rapport au volant VOL, mais est sensiblement décalé vers la droite du volant VOL (pour un véhicule à direction à gauche) et vers le haut de la planche de bord PDB de manière à rester dans le champ de vision du conducteur pendant la conduite.

La surface d'affichage SAF rectangulaire du dispositif d'écran d'affichage tactile DEC, correspond sensiblement à la surface « hors tout » du dispositif d'écran d'affichage tactile DEC.

Le dispositif d'écran d'affichage tactile DEC selon l'invention, se présente globalement comme une dalle tactile rectangulaire de grande longueur implantée sur la planche de bord PDB. Elle met en oeuvre par exemple une technologie d'affichage de type TFT LCD (Thin Film Transistor Light-Emitting Diode) ou équivalent de type OLED (Organic Light-Emitting Diode) ou encore AMOLED (Active Matrix OLED), associée à une couche de détection tactile.

Sa longueur est par exemple sensiblement égale à quatre fois sa largeur.

La surface d'affichage SAF est divisée en au moins une première partie SA1, la plus à gauche du dispositif d'écran d'affichage tactile DEC, correspondant à la première partie d'écran EC1, et une deuxième partie SA2, adjacente à la première SA1, s'étendant à droite de la première partie SA1 et définissant la partie restante de la surface d'affichage SAF, correspondant à la deuxième partie d'écran EC2.

La première partie SA1 de la surface d'affichage SAF est destinée à l'affichage des informations de conduite et des indicateurs et témoins lumineux aptes à renseigner le conducteur sur le fonctionnement du véhicule et sur les paramètres de conduite. Elle reprend sensiblement le même agencement qu'un écran tactile de combiné traditionnel.

Comme illustré à la figure 2, le dispositif d'écran selon l'invention affiche, dans l'angle supérieur gauche de la première partie d'écran EC1, un bouton de commande tactile TOP porteur d'un objet graphique sous la forme d'un pictogramme PIC représentatif de la fonction de gestion de suivi du paiement dans une infrastructure de péage en flux libre.

Le pictogramme PIC symbolise, schématiquement, une barrière de péage d'une voie de péage autoroutier, surmontée d'un véhicule communicant avec la barrière.

Le pictogramme PIC est de couleur grise dans une situation initiale quand la fonction de gestion de suivi du paiement est désactivée ou indisponible.

La deuxième partie d'affichage SA2 est destinée à l'affichage d'un nombre déterminé de pages d'écran adjacentes PG1-PG5 dédiées respectivement à une ou plusieurs fonctionnalités du véhicule VHL et dont les dimensions et l'agencement sont adaptés au type d'information portée par les pages PG1-PG5 et à une conception graphique déterminée fixée par le constructeur du véhicule automobile.

Le terme « page » est ici utilisé par analogie aux pages d'un écran central traditionnel, pages qui dans ce type d'écrans s'affichent en se succédant les unes après les autres à l'écran à la suite d'une commande faite à partir d'un menu ou de boutons de commande dédiés.

Dans la deuxième partie d'affichage SA2 (EC2) du dispositif d'écran d'affichage tactile DEC selon l'invention, toutes les pages PG1-PG5 sont affichées simultanément mais le contenu des pages PGA-PG5 peut changer.

On trouve, par exemple, des pages dédiées à l'affichage d'informations sur des fonctionnalités en cours et des pages dédiées à la commande de fonctionnalités définissant des boutons de commande tactiles du véhicule VHL que l'utilisateur peut sélectionner directement à partir de la page qui est déjà affichée sur la deuxième partie d'affichage SA2 (EC2).

Le contenu d'une page dédiée à l'affichage d'informations, peut, une fois une commande de fonctionnalité sélectionnée, changer de contenu et afficher des informations en rapport avec la fonctionnalité commandée.

Ainsi, on trouve des pages dédiées au système audio ou à l'info divertissement du véhicule VHL comme l'affichage du titre d'un morceau de musique sélectionné par l'utilisateur à partir d'une playlist préenregistrée ou la station de radio sélectionnée à partir du la liste des stations mémorisées, le nom et/ou le numéro de téléphone d'un contact sélectionné à partir d'un répertoire téléphonique, des pages dédiées à l'aide à la conduite comme l'itinéraire suivi par le véhicule VHL fixé par le système de navigation, le contrôle de trajectoire du véhicule VHL, les distances de sécurité, la rétrovision, ..., des pages dédiées au confort des occupants du véhicule VHL : climatisation, température des sièges, ..., des pages dédiées au paramétrage en relation avec un organe ou un équipement du véhicule VHL, etc.

Les pages peuvent contenir des images ou photos, des représentations graphiques de type pictogrammes s'agissant de commandes, ou autres.

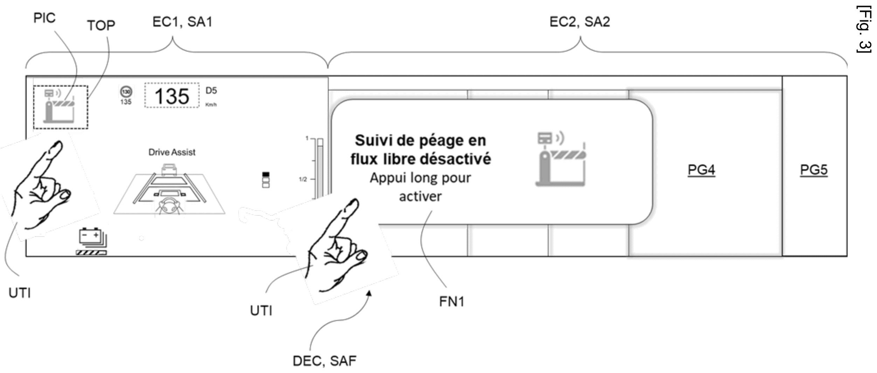

Avantageusement, comme illustré à la figure 3, en partant d'une première situation initiale dans laquelle la fonction de gestion de suivi du paiement est désactivée ou indisponible, un appui court sur le bouton TOP porteur du pictogramme PIC de couleur grise, commande l'affichage d'une première fenêtre FN1, ou « pop up » en anglais, en superposition partielle des pages PG1-PG4 de la deuxième partie d'écran EC2 et qui est configurée pour afficher une information sur l'état de la fonction correspondant ici à : « Suivi de péage en flux libre désactivé » et une éventuelle action à réaliser, ici « Appui long pour activer ».

Le pictogramme PIC du bouton TOP, de couleur grise, est affiché en rappel, à droite dans la fenêtre FN1.

Si l'utilisateur UTI appuie (appui court) à nouveau sur le bouton TOP, la fenêtre FN1 disparait de la deuxième partie d'écran EC2.

Un appui « long » est défini par rapport à un appui « court ». Un appui « court » est à un appui « furtif » alors qu'un appui « long » nécessite un maintien du doigt de l'utilisateur UTI sur le bouton TOP pendant au moins une durée déterminée jusqu'à l'affichage de la fenêtre d'affichage.

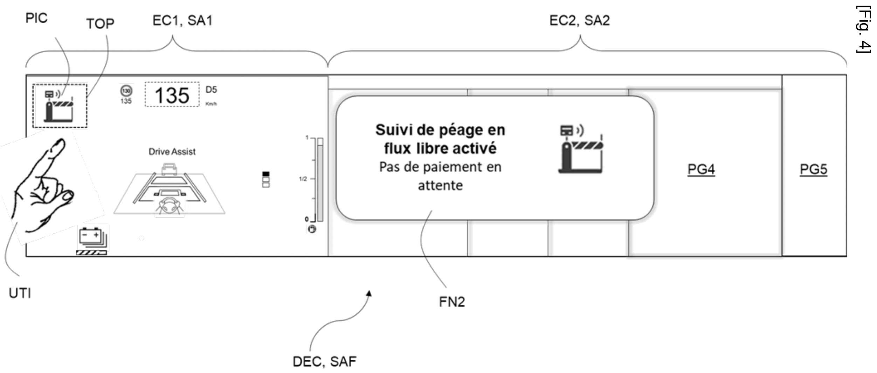

En partant d'une deuxième situation initiale, illustrée à la figure 4, dans laquelle la fonction de gestion de suivi du paiement est activée, indiquée par le bouton TOP porteur du pictogramme PIC de couleur verte, un appui court sur le bouton TOP avec le pictogramme PIC de couleur verte, commande l'affichage d'une deuxième fenêtre FN2, en superposition partielle des pages PG1-PG4 de la deuxième partie d'écran EC2, affichant une information sur la disponibilité de la fonction de gestion de suivi du paiement, correspondant ici à : « Suivi de péage en flux libre activé » et l'état de paiement correspondant ici à : « pas de paiement en attente ».

Le pictogramme PIC du bouton TOP de couleur verte est affiché pour rappel à droite dans la fenêtre FN2.

Si l'utilisateur UTI appuie (appui court) à nouveau sur le bouton TOP, la fenêtre FN2 disparait de la deuxième partie d'écran EC2.

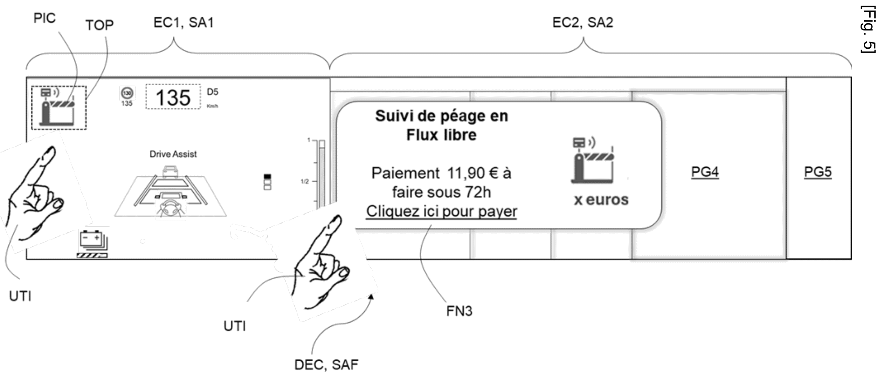

La figure 5 illustre une troisième situation initiale dans laquelle la fonction de gestion de suivi du paiement est opérationnelle, et un paiement est à faire prochainement, situation indiquée par le bouton TOP avec le pictogramme PIC de couleur orange.

Quand l'utilisateur UTI appuie (appui court) sur le bouton TOP, l'appui court commande l'affichage d'une troisième fenêtre FN3 en superposition partielle des pages PG1-PG4 de la deuxième partie d'écran EC2, affichant l'information suivante : « Suivi de péage en flux libre », le montant à régler et le délai pour payer avant majoration, ici : « Paiement 11,90€ à faire sous 72h ».

Une ligne de commande active, ou raccourci de commande, est également affichée dans la fenêtre FN3 permettant à l'utilisateur UTI, à la suite d'un appui sur le raccourci, d'accéder à une plateforme (ou cloud en anglais) hébergeant un serveur distant de paiement en ligne et lui permettant d'effectuer le paiement de 11,90€ en ligne à partir du véhicule VHL.

Le pictogramme PIC du bouton TOP, de couleur orange, est affiché pour rappel à droite dans la fenêtre FN3 avec le libellé suivant, rajouté sous le pictogramme : « x euros »

Si l'utilisateur UTI appui (appui court) à nouveau sur le bouton TOP, la fenêtre FN3 disparait de la deuxième partie d'écran EC2.

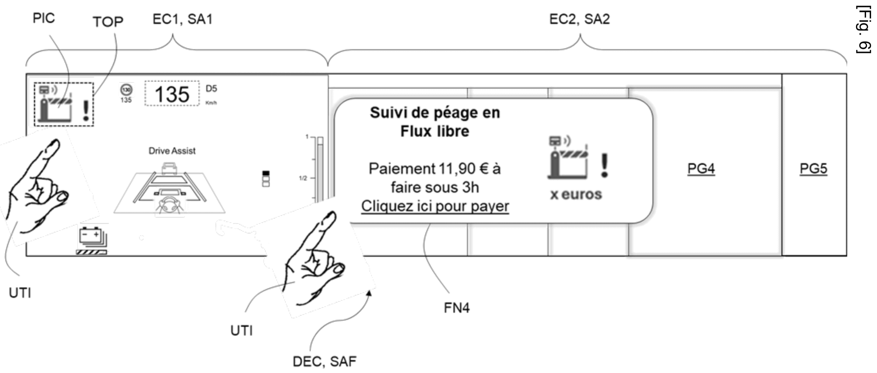

La figure 6 illustre une quatrième situation initiale, dans laquelle la fonction de gestion de suivi du paiement est activée, et un paiement avant majoration est à faire avant un délai déterminée plus court que celui précédemment indiqué à la figure 5.

Cette situation est indiquée par le pictogramme PIC du bouton TOP, de couleur orange, auquel est rajouté un point d'exclamation « ! » également de couleur orange, évoquant un rappel, ou alerte, à droite du pictogramme PIC symbolisant la barrière de péage.

Quand l'utilisateur UTI appuie (appui court) sur le bouton TOP, l'appui court commande l'affichage d'une quatrième fenêtre FN4 en superposition partielle des pages PG1-PG4 de la deuxième partie d'écran EC2, en affichant toujours l'information suivante : « Suivi de péage en flux libre », le montant à régler, ici : « Paiement 11,90€ », mais dans un deuxième délai de paiement plus court (que le premier délai de la figure 5), ici : « à faire sous 3h».

Une ligne de commande active, ou raccourci de commande, est également affichée dans la fenêtre FN4 (« Cliquez ici pour payer ») permettant à l'utilisateur UTI, suite à un appui sur le raccourci de commande, d'accéder directement à une plateforme (ou cloud en anglais) hébergeant un serveur de paiement en ligne distant et lui permettant d'effectuer le paiement de 11,90€ en ligne.

Le pictogramme PIC du bouton TOP et le point d'exclamation de couleur orange, sont affichés pour rappel à droite dans la fenêtre FN4 accompagnés du libellé « x euros ».

Si l'utilisateur UTI appuie (appui court) à nouveau sur le bouton TOP, la fenêtre FN4 disparait de la deuxième partie d'écran EC2.

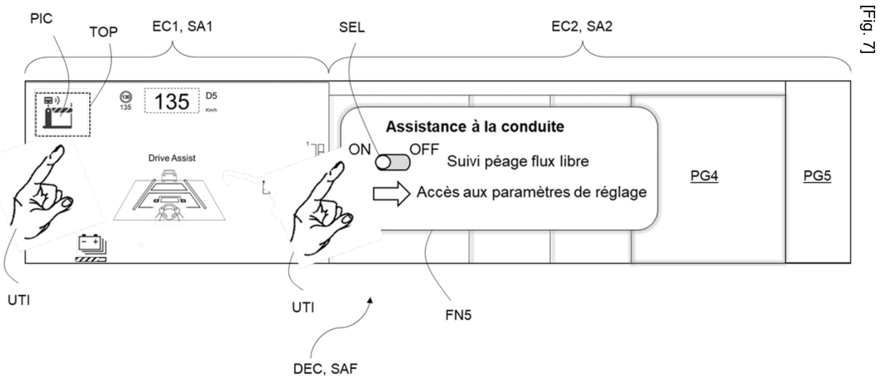

Comme illustré à la figure 7, à partir d'une autre situation initiale dans laquelle le pictogramme PIC du bouton TOP, est de couleur verte (fonction de gestion de suivi du paiement activée), l'utilisateur UTI peut accéder au menu de réglage de la fonction, par un appui « long » sur le bouton TOP avec un pictogramme qui est en « vert».

Cet appui long commande l'affichage d'une cinquième fenêtre FN5 en superposition partielle des pages PG1-PG4 de la deuxième partie d'écran EC2 , affichant l'accès à un menu (non représenté) de réglage des paramètres de la fonction de gestion de suivi du paiement, indiqué par une flèche.

L'utilisateur UTI peut également choisir de désactiver la fonction de gestion de suivi du paiement, via une interface graphique tactile, affichée dans la fenêtre FN5 qui dans l'exemple illustré à la figure 7 prend la forme d'un bouton tactile de sélection SEL de type curseur, apte à être déplacer vers la droite « OFF » pour désactiver la fonction « Suivi péage flux libre ».

La désactivation (curseur SEL vers la droite « OFF ») de la fonction est confirmée par le changement de couleur du pictogramme PIC du bouton TOP qui passe de la couleur verte à la couleur grise.

Si l'utilisateur UTI appuie (appui court) à nouveau sur le bouton TOP, la fenêtre FN5 disparait de la deuxième partie d'écran EC2.

L'accès aux paramètres de réglage est également possible par un appui « long » à partir du bouton TOP avec le pictogramme PIC de couleur grise (fonction de gestion de suivi du paiement désactivée).

L'appui long commande l'affichage de la fenêtre FN5 donnant accès au menu de réglage des paramètres.

L'utilisateur UTI peut alors réactiver la fonction en déplaçant tactilement le curseur de sélection SEL vers la gauche « ON ».

La réactivation de la fonction est confirmée par le changement de couleur du pictogramme PIC du bouton TOP, qui passe de la couleur grise à la couleur verte.

La durée d'affichage des fenêtres d'affichage, FN1-FN5, dans la deuxième partie d'écran EC2 est paramétrée par défaut en usine, ou paramétrable par l'utilisateur UTI parmi des plages de durées déterminées imposées.

En effet, il est important pour la sécurité que la durée d'affichage soit la moins impactante possible pour la conduite du véhicule VHL.

L'utilisateur UTI peut à tout moment interrompre l'affichage d'une fenêtre d'affichage en cours FN1-FN5, soit en réappuyant à nouveau (deuxième appui) sur le bouton de commande tactile TOP soit en appuyant sur une quelconque partie accessible de la surface d'affichage SA2 de la deuxième partie d'écran EC2. Un bouton de commande dédié à la fermeture d'une fenêtre d'affichage FN1-FN5 peut être également affiché sur chacune des fenêtres d'affichage FN1-FN5 (un pictogramme en forme de croix par exemple).

Grâce au dispositif d'écran selon l'invention, il est possible d'interagir de manière tactile avec un unique bouton de commande tactile affiché à l'écran et porteur d'un pictogramme représentatif de la fonction de gestion de suivi du paiement d'un péage en flux libre avec un retour d'information via un changement de couleur du pictogramme, l'adaptation du pictogramme, ...

Avec un simple appui court sur un seul bouton de commande tactile on peut afficher ou masquer les informations indiquant l'état et les informations relatives à la fonction de gestion de suivi du paiement d'un péage en flux libre.

On peut aussi accéder au paramétrage de la fonction et au paiement en ligne via des raccourcis de commande s'affichant dans des fenêtres à la suite d'un appui « long » sur le bouton tactile de commande.

## Revendications

1. Dispositif d'écran d'affichage tactile (DEC) pour véhicule automobile (VHL), comportant une première partie d'écran tactile (EC1) affichant des informations nécessaires pour la conduite du véhicule (VHL) et une deuxième partie d'écran tactile (EC2), adjacente à la première (EC1), affichant un nombre déterminé de pages d'écran adjacentes (PG1-PG5) remplissant la surface d'affichage (SA2) de la deuxième partie d'écran (EC2) et dédiées respectivement à une ou plusieurs fonctionnalités et réglages du véhicule (VHL) ; ladite première partie d'écran (EC1) affichant un bouton de commande tactile (TOP) porteur d'un pictogramme (PIC) représentatif d'une fonction de gestion de suivi du paiement d'un péage en flux libre, configuré pour gérer ladite fonction, à la suite d'un appui d'une durée déterminé par un utilisateur (UTI) du dispositif d'écran (DEC), sur le bouton de commande tactile (TOP).

2. Dispositif (DEC) selon la revendication précédente, dans lequel le bouton de commande tactile (TOP) est configuré pour s'afficher avec un pictogramme (PIC) d'une première couleur déterminée, notamment grise, quand la fonction de gestion de suivi du paiement est désactivée, avec le pictogramme d'une deuxième couleur déterminée, différente de la première, notamment verte quand la fonction de gestion de suivi du paiement est activée et qu'aucun paiement n'est en attente, et avec le pictogramme d'une troisième couleur déterminée différente des première et deuxième couleurs, notamment orange, quand la fonction de gestion de suivi du paiement est activée et qu'un paiement est attendu dans au moins un premier délai de paiement déterminé ; le pictogramme (PIC) de troisième couleur étant adapté graphiquement, notamment par l'ajout d'un point d'exclamation, pour alerter l'utilisateur (UTI) que le paiement est attendu dans un deuxième délai de paiement déterminé plus court que le premier.

3. Dispositif selon la revendication précédente dans lequel le bouton de commande tactile (TOP) est configuré pour commander l'affichage d'une fenêtre (FN1-FN5) de contenu déterminé en rapport avec le pictogramme (PIC) et la couleur du pictogramme (PIC), en superposition partielle de la deuxième partie d'écran (EC2), et pendant une durée déterminée, à la suite d'un premier appui de durée déterminée sur le bouton de commande (TOP) par l'utilisateur (UTI).

4. Dispositif (DEC) selon la revendication précédente, dans lequel la deuxième partie d'écran (EC2) est configurée pour afficher une première fenêtre d'affichage (FN1) à la suite d'un premier appui court sur le bouton de commande tactile (TOP) quand la fonction de gestion de suivi est désactivée ; le contenu de ladite première fenêtre (FN1) informant l'utilisateur (UTI) que la fonction de suivi est désactivée et qu'un appui long sur ladite fenêtre (FN1) permet d'activer la fonction de gestion de suivi.

5. Dispositif (DEC) selon la revendication 3, dans lequel la deuxième partie d'écran (EC2) est configurée pour afficher une deuxième fenêtre d'affichage (FN2) à la suite d'un premier appui court sur le bouton de commande tactile (TOP) quand la fonction de gestion de suivi est activée ; le contenu de ladite deuxième fenêtre (FN2) informant l'utilisateur (UTI) que la fonction de suivi est activée et qu'aucun paiement n'est en attente.

6. Dispositif (DEC) selon la revendication 3, dans lequel la deuxième partie d'écran (EC2) est configurée pour afficher une troisième fenêtre d'affichage (FN3) à la suite d'un premier appui court sur le bouton de commande tactile (TOP) quand la fonction de gestion de suivi est activée et qu'un paiement d'un montant déterminé est attendu dans un premier délai de paiement déterminé ; le contenu de ladite troisième fenêtre (FN3) informant l'utilisateur (UTI) qu'un paiement d'un montant déterminé est attendu dans le premier délai déterminé, notamment soixante-douze heures, et affichant un raccourci de commande tactile permettant à l'utilisateur (UTI) d'accéder à une plateforme de paiement en ligne distante.

7. Dispositif (DEC) selon la revendication 3, dans lequel la deuxième partie d'écran (EC2) est configurée pour afficher une quatrième fenêtre d'affichage (FN4) à la suite d'un premier appui court sur le bouton de commande tactile (TOP) quand la fonction de gestion de suivi est activée et qu'un paiement d'un montant déterminé est attendu dans le deuxième délai de paiement déterminé ; le contenu de ladite quatrième fenêtre (FN4) informant l'utilisateur (UTI) qu'un paiement d'un montant déterminé est attendu dans un deuxième délai déterminé notamment trois heures et affichant un raccourci de commande tactile permettant à l'utilisateur (UTI) d'accéder à une plateforme de paiement en ligne distante.

8. Dispositif (DEC) selon la revendication 3, dans lequel la deuxième partie d'écran (EC2) est configurée pour afficher une cinquième fenêtre d'affichage (FN5) à la suite d'un premier appui long sur le bouton de commande tactile (TOP) quand la fonction de gestion de suivi est activée ou désactivée ; le contenu de ladite cinquième fenêtre (FN4) affichant un agencement tactile de sélection (SEL) pour l'activation ou de la désactivation de la fonction de gestion de suivi, et un raccourci de commande tactile permettant à l'utilisateur (UTI) d'accéder à des paramètres de réglage de la fonction.

9. Dispositif (DEC) selon l'une quelconque des revendications 3 à 8, dans lequel la fenêtre d'affichage (FN1-FN5) disparait de la deuxième partie d'écran (EC2) à la suite d'un deuxième appui sur le bouton de commande tactile (TOP) par l'utilisateur (UTI).

10. Véhicule automobile (VHL) comportant un dispositif d'écran d'affichage tactile (DEC) selon l'une quelconque des revendications précédentes.
